(19) Europäisches Patentamt
European Patent Office
Office européen des brevets

(11) EP 4 616 930 A1

(12) **EUROPEAN PATENT APPLICATION**

(43) Date of publication:
**17.09.2025 Bulletin 2025/38**

(21) Application number: **25162841.8**

(22) Date of filing: **11.03.2025**

(51) International Patent Classification (IPC):
***B01D 71/70*** *(2006.01)*

(52) Cooperative Patent Classification (CPC):
**B01D 71/701**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.03.2024 JP 2024039275**

(71) Applicant: **Seiko Epson Corporation**
**Tokyo 160-8801 (JP)**

(72) Inventors:
- **TAKEGAMI, Ryoji**
  **Suwa-shi, 392-8502 (JP)**
- **HORIUCHI, Yuta**
  **Suwa-shi, 392-8502 (JP)**
- **MIYAZAWA, Hiromu**
  **Suwa-shi, 392-8502 (JP)**

(74) Representative: **Lewis Silkin LLP**
**Arbor**
**255 Blackfriars Road**
**London SE1 9AX (GB)**

(54) **GAS SEPARATION MEMBRANE**

(57) Provided is a gas separation membrane that selectively separates carbon dioxide from a mixed gas by allowing the carbon dioxide to permeate. The gas separation membrane includes: a thin film made of a polydimethylsiloxane derivative that includes a main chain formed of a siloxane bond and a methyl group bonded to silicon atoms contained in the siloxane bond, with a part of the methyl group being substituted with a substituent X. A molecular descriptor $\alpha_{MOL}$ of the substituent X calculated based on the following Formulae (1) and (2) satisfies the following Formula (3).

$$\alpha_{MOL} = \sum_{i}^{N} \alpha_{A_i} \qquad (1)$$

[In the above Formula (1), i is a natural number that changes from 1 to N. N is the number of atoms excluding hydrogen atoms contained in the substituent X.]

$$\alpha_{A_i} = \frac{r_{A_i}}{r_C} - 1 \qquad (2)$$

[In the above Formula (2), $r_{Ai}$ is a covalent bond distance of atoms excluding the hydrogen atoms contained in the substituent X. $r_C$ is the covalent bond distance of an $sp^3$ orbital of the carbon atoms.]

$$\alpha_{MOL} < 0 \qquad (3)$$

FIG. 1

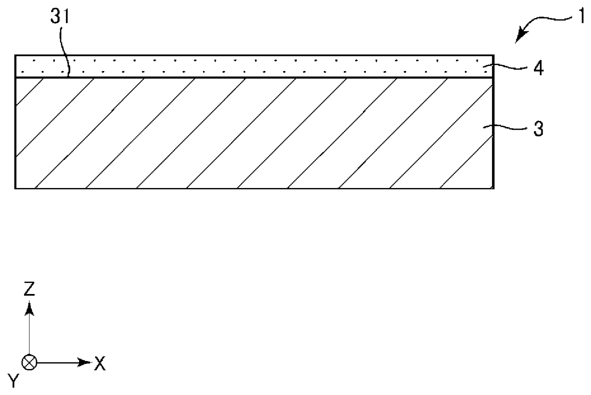


EP 4 616 930 A1

## Description

The present application is based on, and claims priority from JP Application Serial Number 2024-039275, filed March 13, 2024, the disclosure of which is hereby incorporated by reference herein in its entirety.

BACKGROUND

1. Technical Field

The present disclosure relates to a gas separation membrane.

2. Related Art

In order to implement carbon neutrality, a technique is considered to capture and directly collect carbon dioxide from an atmosphere. As the technique, it is known a chemical absorption and adsorption method in which carbon dioxide is absorbed in an absorbing liquid or an adsorbent, and a membrane separation method in which carbon dioxide is separated using a gas separation membrane.

For example, JP-A-60-075320 discloses a gas selective permeable composite membrane which selectively allows a specific gas to permeate therethrough. The gas selective permeable composite membrane is produced through processes of laminating a thin film of a siloxane compound on a film-shaped polymer porous support, subjecting a surface layer of the thin film to a plasma treatment with a non-polymerizable gas, and depositing a plasma polymerized membrane on the thin film. It is disclosed that a gas selective permeable composite membrane having strong adhesion between a thin membrane and a plasma polymerized membrane can be obtained by these processes, and a thickness of the thin membrane is 1 μm to 30 μm. Further, it is disclosed that the gas selective permeable composite membrane is used to selectively allow gases such as oxygen, hydrogen, helium, and the like to permeate therethrough, and the separated gases are collected. It is also considered that use of such a gas selective permeable composite membrane enables separation of carbon dioxide.

In the gas selective permeable composite membrane disclosed in JP-A-60-075320, two thin films, both made of organosiloxane compounds, are laminated on a porous support.

As a result of studies by the present inventors, it is found that the organosiloxane compound has room for improvement in gas separability of carbon dioxide to nitrogen and gas permeability of carbon dioxide.

Therefore, an object of the present disclosure is to implement a gas separation membrane which is excellent in gas separability of carbon dioxide against nitrogen and excellent in gas permeability of carbon dioxide.

SUMMARY

A gas separation membrane according to an application example of the present disclosure is a gas separation membrane that selectively separates carbon dioxide from a mixed gas containing the carbon dioxide and nitrogen by allowing the carbon dioxide to permeate, the gas separation membrane includes:

a thin film made of a polydimethylsiloxane derivative that includes a main chain formed of a siloxane bond and a methyl group bonded to silicon atoms contained in the siloxane bond, with a part of the methyl group being substituted with a substituent X, and

a molecular descriptor $\alpha_{MOL}$ of the substituent X calculated based on the following Formulae (1) and (2) satisfies the following Formula (3),

$$\alpha_{\mathrm{MOL}} = \sum_{i}^{N} \alpha_{\mathrm{A}_i} \qquad (1)$$

in the above Formula (1), i is a natural number that changes from 1 to N, and N is the number of atoms excluding hydrogen atoms contained in the substituent X, and

$$\alpha_{\mathrm{A}_i} = \frac{r_{\mathrm{A}_i}}{r_{\mathrm{C}}} - 1 \qquad (2)$$

in the above Formula (2), $r_{Ai}$ is a covalent bond distance of atoms excluding the hydrogen atoms contained in the substituent X, and $r_C$ is a covalent bond distance of an $sp^3$ orbital of carbon atoms.

$$\alpha_{MOL} < 0 \qquad (3)$$

BRIEF DESCRIPTION OF THE DRAWINGS

FIG. 1 is a cross-sectional view schematically showing a gas separation membrane according to an embodiment.

DESCRIPTION OF EMBODIMENTS

Hereinafter, a gas separation membrane according to the present disclosure will be described in detail based on an embodiment shown in the accompanying drawings.

1. Overview of Gas Separation Membrane

First, a configuration of a gas separation membrane according to the embodiment will be described.

FIG. 1 is a cross-sectional view schematically showing a gas separation membrane 1 according to the embodiment. In FIG. 1 of the present application, an X axis, a Y axis, and a Z axis are set as three axes orthogonal to one another, and are indicated by arrows. A base end of the arrow indicating each axis is designated as "minus" and a tip end as "plus".

The gas separation membrane 1 shown in FIG. 1 has a function of selectively permeating and separating carbon dioxide from a mixed gas containing carbon dioxide and nitrogen. The gas separation membrane 1 shown in FIG. 1 is a composite membrane having a first layer 3 and a second layer 4. The configuration of the gas separation membrane 1 shown in FIG. 1 is an example, and the first layer 3 may be omitted, for example.

An average thickness of the second layer 4 is set to be thinner than an average thickness of the first layer 3. Accordingly, the second layer 4 has high gas permeability while having good gas separability.

In the gas separation membrane 1 shown in FIG. 1, a Z-axis plus side is referred to as "upper", and a Z-axis minus side is referred to as "lower". A mixed gas is supplied above the gas separation membrane 1. In the gas separation membrane 1 of FIG. 1, carbon dioxide selectively permeates from an upper side to a lower side and is separated.

1.1. First Layer

A form of the first layer 3 is not particularly limited, and may be a sheet shape (flat plate shape) shown in FIG. 1, a spiral shape, a tubular shape, a hollow thread shape, or the like.

Examples of the material of the first layer 3 include a polymer material. Examples of the polymer material include polyolefin resins such as polyethylene and polypropylene, fluorine-containing resins such as polytetrafluoroethylene, polyvinyl fluoride, and polyvinylidene fluoride, polystyrene, cellulose acetate, polyurethane, polyacrylonitrile, polyphenylene oxide, polysulfone, polyethersulfone, polyimide, polyaramid, and organopolysiloxane.

Among these, the organopolysiloxane is preferably used as the material of the first layer 3. One molecule of the organopolysiloxane includes at least a unit (a T unit) represented by $R^1SiO_{3/2}$, a unit (a D unit) represented by $R^2R^3SiO_{2/2}$, and a unit (an M unit) represented by $R^4R^5R^6SiO_{1/2}$ as a basic constituent unit. In each unit, $R^1$ to $R^6$ are an aliphatic hydrocarbon or a hydrogen atom. One molecule of the organopolysiloxane includes a combination of the T unit, the D unit, and the M unit.

Specific examples of the organopolysiloxane include polydimethyl siloxane, polymethylphenylsiloxane, polydiphenylsiloxane, polysulfone/polyhydroxystyrene/polydimethylsiloxane copolymer, dimethylsiloxane/methylvinylsiloxane copolymer, dimethylsiloxane/diphenylsiloxane/methylvinylsiloxane copolymer, methyl-3,3,3-trifluoropropylsiloxane/methylvinylsiloxane copolymer, dimethylsiloxane/methylphenylsiloxane/methylvinylsiloxane copolymer, diphenylsiloxane/dimethylsiloxane copolymer terminated with vinyl, polydimethylsiloxane terminated with vinyl, polydimethylsiloxane terminated with H, and dimethylsiloxane-methylhydrosiloxane copolymer. These includes a form in which a crosslinking reactant is formed. The material of the first layer 3 may be one kind or a composite of two or more kinds thereof, or may be a composite material containing the organopolysiloxane as a main component in a mass ratio and other resin components in combination.

The organopolysiloxane has a large interatomic distance of a Si-O bond and a Si-C bond constituting the organopolysiloxane of about 1.8 angstroms, and has a large free volume, which thus allows good diffusion of carbon dioxide molecules and good gas permeability to carbon dioxide. Therefore, the organopolysiloxane is useful as the material of the first layer 3.

The average thickness of the first layer 3 is preferably set to be thicker than the average thickness of the thin film included in the second layer 4. Accordingly, the first layer 3 serves as a base layer of the gas separation membrane 1 and has necessary and sufficient mechanical properties. A difference between the average thickness of the first layer 3 and the average thickness of the second layer 4 is preferably 5 μm or more, and more preferably 30 μm or more.

The average thickness of the first layer 3 is preferably 1 μm or more and 3000 μm or less, more preferably 5 μm or more and 500 μm or less, and still more preferably 10 μm or more and 150 μm or less. Accordingly, the first layer 3 having necessary and sufficient mechanical properties and sufficient gas permeability can be implemented.

The average thickness of the first layer 3 is obtained, for example, as an average value of thicknesses measured at 10 locations of the first layer 3 by observing a cross section of the gas separation membrane 1 in an enlarged manner.

The gas permeability of the carbon dioxide in the first layer 3 is preferably set to be higher than the gas permeability of the carbon dioxide in the second layer 4. Specifically, when a target gas component is carbon dioxide, a gas permeation rate of first layer 3 is higher than a gas permeation rate of second layer 4. Accordingly, the first layer 3 can impart good gas permeability to the gas separation membrane 1 while mechanically supporting the second layer 4.

High gas permeability means that the permeation rate of carbon dioxide is high. Specifically, for the single first layer 3 and the single second layer 4, when carbon dioxide is supplied upstream at a total pressure of 5 MPa, the permeation rate of carbon dioxide through the first layer 3 is to be higher than the permeation rate of carbon dioxide through the second layer 4.

The carbon dioxide permeation rate of the first layer 3, when carbon dioxide is supplied upstream at the total pressure of 5 MPa at a temperature of 40°C, is preferably $1 \times 10^{-5}$ $cm^3$ (STP)/$cm^2$·sec·cmHg (10 GPU) or more, more preferably $3 \times 10^{-5}$ $cm^3$ (STP)/$cm^2$·sec·cmHg (30 GPU) or more, still more preferably 100 GPU or more, and particularly preferably 200 GPU or more.

The first layer 3 can be produced by a method for producing a sheet or a film. In addition, the first layer can also be produced by a method for forming a film on a sacrificial layer and then removing the sacrificial layer.

1.2. Second Layer

The second layer 4 is provided on an upper surface 31 (one surface) of the first layer 3. The second layer 4 has gas separability of carbon dioxide against nitrogen.

1.2.1. Molecular Descriptor $\alpha_{MOL}$ of Substituent X

The second layer 4 includes a thin film made of a polydimethylsiloxane derivative. The second layer 4 may be formed of the thin film alone, or may include a monomolecular film or a monoatomic film provided on a surface of the thin film. Examples of the monomolecular film include a film derived from a silane coupling agent.

The polydimethylsiloxane derivative is obtained by substituting a portion of methyl groups contained in the polydimethyl siloxane with a substituent X. Polydimethyl siloxane as a base includes a main chain formed of siloxane bonds and methyl groups bonded to silicon atoms contained in the siloxane bonds, and is excellent in gas permeability of carbon dioxide. By introducing the substituent X into such polydimethyl siloxane, the gas separability of carbon dioxide against nitrogen can be enhanced. As a result, the gas separation membrane 1 having good gas separability of carbon dioxide against nitrogen and good gas permeability of carbon dioxide can be implemented.

However, there is no specific guideline known as to what kind of substituent X is to be selected to solve the above problem. Therefore, the present inventor conducts extensive research into optimizing a molecular structure of the polydimethylsiloxane derivative. Further, the present inventor then discovers that, by selecting the substituent X based on a covalent bond distance of each atom, it is possible to implement a thin film that exhibits good gas separability of carbon dioxide against nitrogen without impairing the gas permeability of carbon dioxide, and thus completes the present disclosure.

Specifically, in the thin film of the polydimethylsiloxane derivative, the molecular descriptor $\alpha_{MOL}$ of the substituent X calculated based on the following Formulas (1) and (2) satisfies the following Formula (3).

$$\alpha_{\mathrm{MOL}} = \sum_{i}^{N} \alpha_{\mathrm{A}_i} \qquad (1)$$

[In the above Formula (1), i is a natural number that changes from 1 to N. N is the number of atoms excluding hydrogen atoms contained in the substituent X.]

$$\alpha_{A_i} = \frac{r_{A_i}}{r_C} - 1 \qquad (2)$$

[In the above Formula (2), $r_{Ai}$ is a covalent bond distance of atoms excluding the hydrogen atoms contained in the substituent X. $r_C$ is the covalent bond distance of an $sp^3$ orbital of the carbon atoms.]

$$\alpha_{MOL} < 0 \qquad (3)$$

When the molecular descriptor $\alpha_{MOL}$ of the substituent X satisfies the above Formula (3), the second layer 4 having high gas separability of carbon dioxide against nitrogen can be implemented. Such a substituent X is unlikely to impair the excellent gas permeability of carbon dioxide that polydimethyl siloxane has. Therefore, the gas separation membrane 1 having good gas separability of carbon dioxide against nitrogen and good gas permeability of carbon dioxide can be implemented.

The molecular descriptor $\alpha_{MOL}$ of the substituent X is also called HallKierAlpha, and corresponds to a sum of the descriptors $\alpha_{Ai}$ which include a ratio of the covalent bond distance $r_{Ai}$ to the covalent bond distance $r_C$ as represented by the above Formula (2). Therefore, the substituent X formed of atoms having a short covalent bond distance $r_{Ai}$ is likely to satisfy the above Formula (2).

In addition, the molecular descriptor $\alpha_{MOL}$ preferably satisfies the following Formula (3-1), and more preferably satisfies the following Formula (3-2).

$$\alpha_{MOL} \leqq -1.00 \qquad (3-1)$$

$$\alpha_{MOL} \leqq -2.00 \qquad (3-2)$$

On the other hand, a lower limit value of the molecular descriptor $\alpha_{MOL}$ is not particularly limited, but taking into consideration availability of materials that achieve it, it is preferably -7.00 or more, and more preferably -6.00 or more.

Here, a calculation example of the molecular descriptor $\alpha_{MOL}$ will be described.

As shown in the above Formula (1), the molecular descriptor $\alpha_{MOL}$ is the sum of the descriptor $\alpha_{Ai}$ of each atom in the substituent X defined by the above Formula (2). In the calculation of the descriptor $\alpha_{Ai}$, hydrogen atoms are excluded.

As an example, a case of butadiene (C=C-C=C) is considered. Butadiene has four carbon atoms, and electron orbitals of the four carbon atoms are all $sp^2$ orbitals. A covalent bond distance via the $sp^2$ orbital is 0.67 Å. Meanwhile, a covalent bond distance via the $sp^3$ orbital is 0.77 Å. Therefore, the descriptor $\alpha_{Ai}$ defined by the above Formula (2) is (0.67/0.77) - 1 = -0.13. Then, the molecular descriptor $\alpha_{MOL}$ defined by the above Formula (1) is (-0.13) × 4 = -0.52.

As another example, a case of butane (C-C-C-C) is considered. Although butane has four carbon atoms, electron orbitals of the four carbon atoms are all $sp^3$ orbitals. Therefore, the descriptor $\alpha_{Ai}$ defined by the above Formula (2) is (0.77/0.77) - 1 = 0. Then, the molecular descriptor $\alpha_{MOL}$ defined by the above Formula (1) is 0 × 4 = 0.

As in the above example, the molecular descriptor $\alpha_{MOL}$ of various substituents X can be calculated.

Covalent bonding distances r according to typical electron orbitals are listed in Table 1 below.

Table 1

| Atom | Electron orbital | Covalent bond distance r [Å] |
|---|---|---|
| C | $sp^3$ orbital | 0.77 |
| | $sp^2$ orbital | 0.67 |
| | sp orbital | 0.60 |
| N | $sp^3$ orbital | 0.74 |
| | $sp^2$ orbital | 0.62 |
| | sp orbital | 0.55 |
| O | $sp^3$ orbital | 0.74 |
| | $sp^2$ orbital | 0.62 |
| F | - | 0.72 |

(continued)

| Atom | Electron orbital | Covalent bond distance r [Å] |
|---|---|---|
| P | $sp^3$ orbital | 1.10 |
| | $sp^2$ orbital | 1.00 |
| S | $sp^3$ orbital | 1.04 |
| | $sp^2$ orbital | 0.94 |
| Cl | - | 0.99 |
| Br | - | 1.14 |
| I | - | 1.33 |

The polydimethylsiloxane derivative is represented by the following general Formula (A).

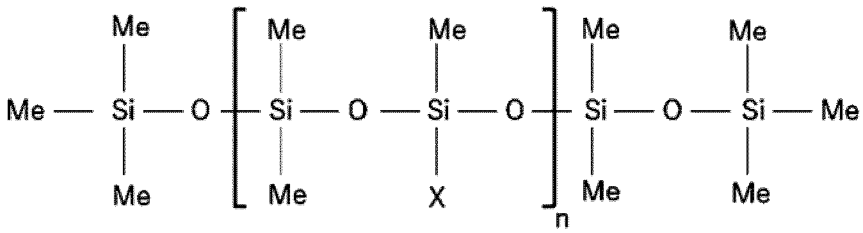

(A)

[In the above general Formula (A), Me is a methyl group. X is a substituent X. n is the number of repeating units.]

The substituent X in the polydimethylsiloxane derivative substitutes a part of the methyl group of the polydimethylsiloxane. A ratio (substitution ratio) in which the methyl group of the polydimethyl siloxane is substituted with the substituent X is not particularly limited, and is preferably 10% or more and 40% or less, and more preferably 20% or more and 30% or less in terms of number ratio. Accordingly, the gas separation membrane 1 having both good gas separability of carbon dioxide against nitrogen and good gas permeability of carbon dioxide can be implemented.

When the substitution ratio is less than the lower limit value, the gas separability may decrease. On the other hand, when the substitution ratio is more than the upper limit value, the gas permeability may decrease.

As a molecular model for calculating the molecular descriptor $\alpha_{MOL}$, a molecular model having a structure represented by the following Formula (X-0) is used as a model imitating the general Formula (A).

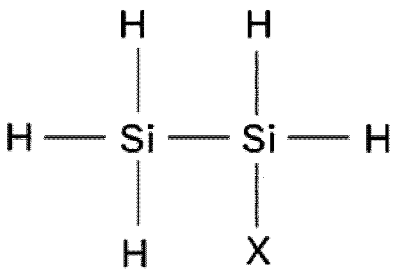

(X-0)

A weight average molecular weight of the polydimethylsiloxane derivative is not particularly limited, and is preferably 1000 or more and 25000 or less, more preferably 2000 or more and 15000 or less, and still more preferably 2000 or more and 8000 or less. Accordingly, it is possible to obtain a polydimethylsiloxane derivative capable of forming a thin film having sufficient film strength and excellent gas permeability of carbon dioxide.

The weight average molecular weight of the polydimethylsiloxane derivative is a polystyrene-equivalent molecular weight measured by gel permeation chromatography (GPC method).

Such a substituent X is not particularly limited, and groups containing a ring structure such as an aromatic ring or a heterocyclic ring are preferably used. By containing these ring structures, the covalent bond distance of the atoms of the group can be shortened. Accordingly, the substituent X having a small molecular descriptor $\alpha_{MOL}$ is obtained.

Specific examples of the substituent X containing an aromatic ring include a structure represented by the following Formula (X-1).

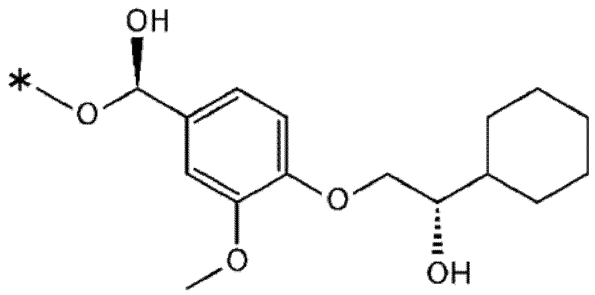

(X-1)

In the above Formula (X-1), * represents a bond bonded to a Si atom contained in the polydimethylsiloxane derivative. The same applies to other Formulas to be described later.

Specific examples of the heterocyclic ring include saturated or unsaturated 5-membered or 6-membered heterocyclic rings. Examples of the heteroatom contained in the heterocyclic ring include a nitrogen atom, a sulfur atom, and an oxygen atom. Further, the number of heteroatoms contained in one heterocyclic ring is preferably 1 to 3.

Among these, as the heterocyclic ring, a heterocyclic ring having a nitrogen atom as the heteroatom (nitrogen-containing heterocyclic ring) is preferably used. In the case of the substituent X containing a nitrogen-containing heterocyclic ring, the molecular descriptor $\alpha_A$ can be made particularly small. This contributes to the implementation of second layer 4 in which the gas separability of carbon dioxide against nitrogen is particularly high.

Examples of the heterocyclic ring having a nitrogen atom as the heteroatom (nitrogen-containing heterocyclic ring) include: diazetidine, pyrazolidone, imidazoline, pyrazoline, imidazoline, pyrazole, imidazole, triazole, tetrazole, oxazole, isoxazole, isothiazole, oxadiazole, thiadiazole, thiazolidinedione, oxazolidone, hydantoin, piperazine, pyridazine, pyrazine, triazine, morpholine, oxazine, thiomorpholine, thiazine, cytosine, thymine, uracil, thiomorpholine dioxide, tetrahydropyrrolopyrrole, dihydropyrrolopyrrole, furopyrrole, thienopyrrole, indazole, benzimidazole, azaindole, pyrazolopyrrole amide, purine, benzisoxazole, benzisothiazole, benzoxazole, benzthiazole, benzothiazazole, adenine, guanine, quinoxaline, fusalazine, quinazoline, cinnoline, naphthulidine, pyridopyrimidine, pyridopyrazine, pteridine, benzoxazine, phenazine, phenoxazine, phenothiazine, diazepine, thiazepine, pyrrole, pyridine, pyrimidine, triazine, indoline, indole, isoindole, indolizine, tetrahydroquinolinoline, dihydroisoquinolinoline, quinoline, isoquinoline, quinolinone, isoquinolinone, carbesol, and acridine.

In addition, the substituent X preferably includes a ring-condensed structure or a ring-assembled structure. By including such a structure, the covalent bond distance of the atoms of the group can be further shortened. Accordingly, the substituent X in which the molecular descriptor $\alpha_{MOL}$ is particularly optimized is obtained. In addition, a separation performance parameter to be described later can be optimized. As a result, the gas separation membrane 1 having particularly high gas separability is obtained.

Specific examples of the aromatic ring having a ring-condensed structure include indene, naphthalene, azulene, fluorene, phenanthrene, anthracene, naphthacene, pyrene, and triphenylene.

Specific examples of the aromatic ring having a ring-assembled structure include biphenyl, terphenyl, 2-phenylnaphthyl, and 1,2'-binaphthyl.

Specific examples of the substituent X containing an aromatic ring having a ring-condensed structure or a ring-assembled structure include the structure represented by the following Formula (X-2).

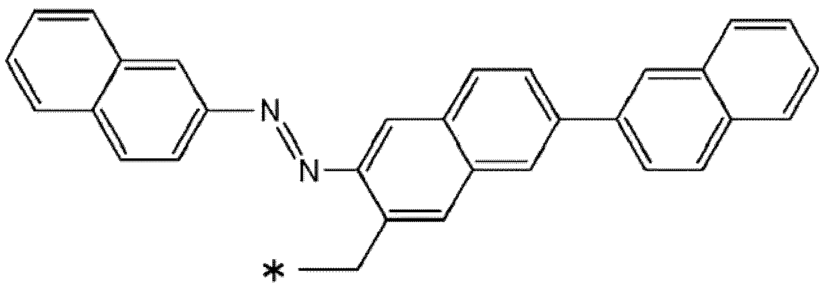

(X-2)

Specific examples of the heterocyclic ring having a ring-condensed structure include indole, benzofuran, tindolizine, chromene, quinoline, purine, indazole, and carbazole.

Specific examples of the substituent X containing the heterocyclic ring having the ring-condensed structure include structures represented by the following Formula (X-3) or Formula (X-4).

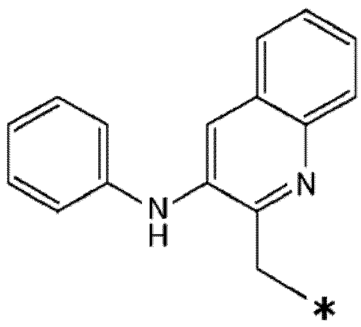

(X-3)

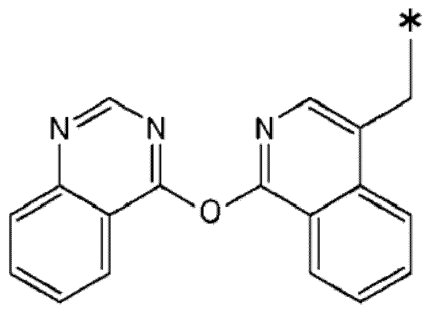

(X-4)

Specific examples of the heterocyclic ring having the ring-assembled structure include 2,3'-bifuran and 2,2'-bipyrazin-6-yl.

Specific examples of the substituent X containing the heterocyclic ring having the ring-assembled structure include structures represented by Formulae (X-5), (X-6), (X-7), (X-8), (X-9), (X-10) and (X-11).

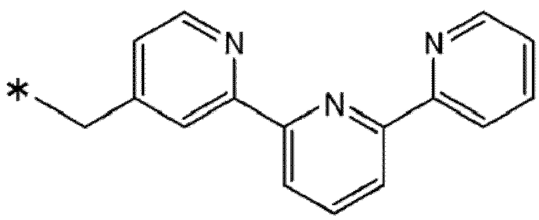

(X-5)

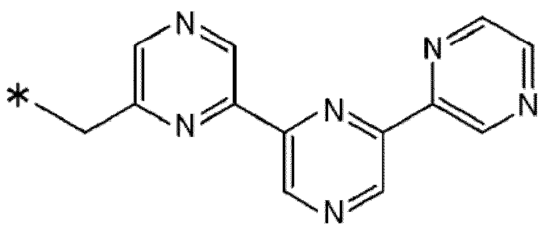

(X-6)

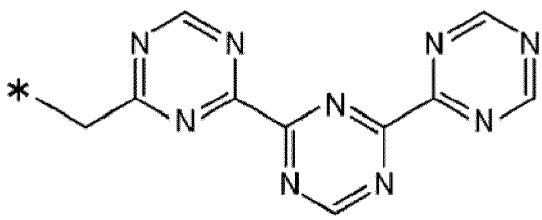

(X-7)

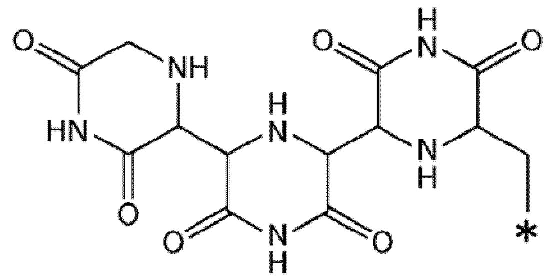

(X-8)

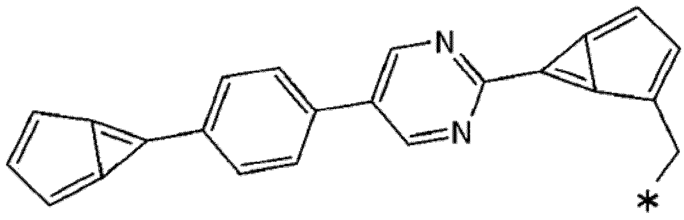

(X-9)

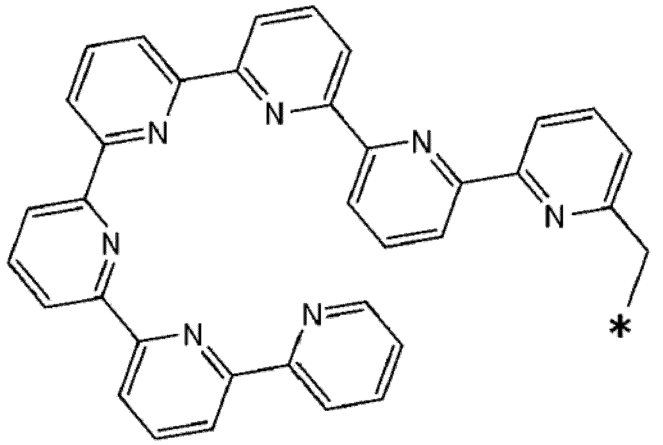

(X-10)

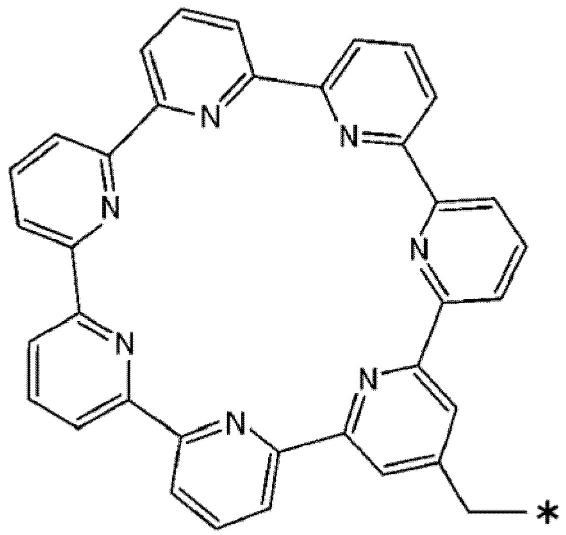

(X-11)

Specific examples of the substituent X containing a heterocyclic ring having a ring-condensed structure or a ring-assembled structure include structures represented by Formulae (X-12), (X-13) and (X-14).

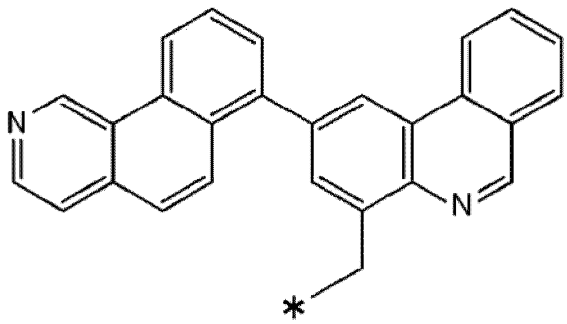

(X-12)

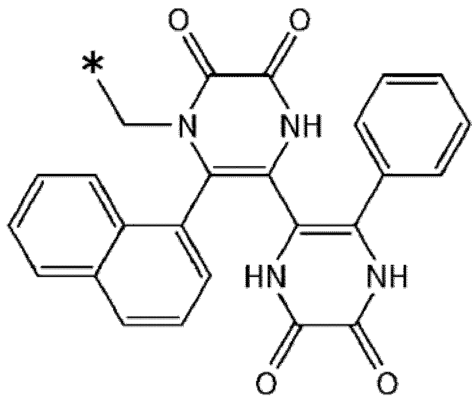

(X-13)

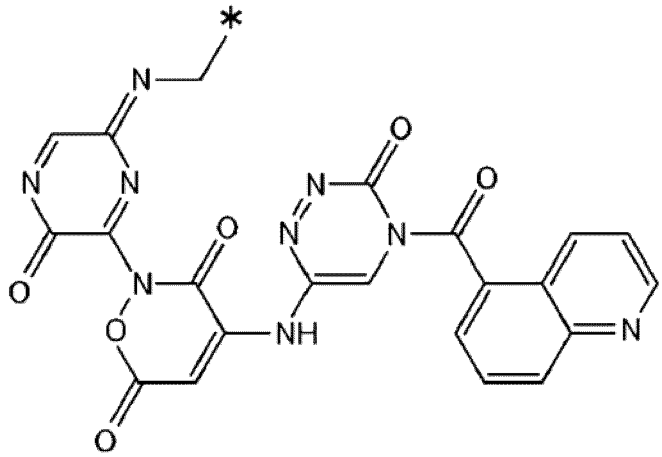

(X-14)

Further, the substituent X preferably contains a ketone group, and more preferably contains a cyclic ketone group. Accordingly, the substituent X in which the molecular descriptor $\alpha_{MOL}$ is particularly optimized is obtained. In addition, a separation performance parameter to be described later can be optimized. As a result, the gas separation membrane 1 having particularly high gas separability is obtained.

Examples of the substituent X containing a ketone group include structures represented by the above Formulae (X-8), (X-13) and (X-14).

These groups may further have a substituent. Examples of the substituent include the groups exemplified above.

The substituent X may contain any divalent group between the above group and the Si atom. Examples of the divalent group include -NH-CO-, -NH-, -O-, -S-, -CO-, and -O-CO-.

1.2.2. Separation Performance Parameter

The gas separability of carbon dioxide from nitrogen is also called "carbon dioxide separation ability". When the molecular descriptor $\alpha_{MOL}$ of the substituent X satisfies Formula (3), it can be said that the second layer 4 has good carbon dioxide separation ability.

The carbon dioxide separation ability depends on a gas to be used together with carbon dioxide in the mixed gas. The present inventor conducts extensive research into an index capable of evaluating the carbon dioxide separation ability

when carbon dioxide is selectively separated from the mixed gas of carbon dioxide and nitrogen. Further, the present inventor also finds that the carbon dioxide separation ability can be quantified by an index referred to as the separation performance parameter based on an activity coefficient of nitrogen and an activity coefficient of carbon dioxide in the second layer 4.

Specifically, the activity coefficient of nitrogen in the second layer 4 calculated by a COSMO-RS method is defined as $\gamma^2_{N2}$, and the activity coefficient of carbon dioxide in the second layer 4 is defined as $\gamma^2_{CO2}$. The separation performance parameter of the second layer 4 at 25°C is defined as $\xi_2 = \ln(\gamma^2_{N2}) - \ln(\gamma^2_{CO2})$. In this case, it is preferable that the second layer 4 satisfies $0.56 < \xi_2$. When the separation performance parameter $\xi_2$ satisfies such a relationship, the second layer 4 can be evaluated as having high carbon dioxide separation ability.

The activity coefficient of nitrogen $\gamma^2_{N2}$ in the second layer 4 represents a degree of non-ideality of the nitrogen molecules in the second layer 4. In addition, the activity coefficient of carbon dioxide $\gamma^2_{CO2}$ in the second layer 4 represents the degree of non-ideality of the carbon dioxide molecules in the second layer 4. The larger the activity coefficient, the greater the non-ideality. Further, when the non-ideality of the carbon dioxide molecules is smaller than the non-ideality of the nitrogen molecules, the second layer 4 can be considered to have a higher affinity for carbon dioxide molecules than for nitrogen molecules. Therefore, the separation performance parameter of the second layer 4 at 25°C is defined as $\xi_2 = \ln(\gamma^2_{N2}) - \ln(\gamma^2_{CO2})$.

When the molecular descriptor $\alpha_{MOL}$ of the above-described substituent X satisfies the above Formula (3), the separation performance parameter $\xi_2$ of the second layer 4 is more likely to satisfy $0.56 < \xi_2$, and good carbon dioxide separation ability can be obtained.

The second layer 4 preferably satisfies $0.80 \leq \xi_2$, and more preferably satisfies $0.90 \leq \xi_2$. When the separation performance parameter $\xi_2$ of the second layer 4 is less than the lower limit value, the relative affinity of carbon dioxide molecules to nitrogen molecules in the second layer 4 may decrease. Therefore, in the second layer 4, the gas separability of the carbon dioxide against nitrogen may decrease. On the other hand, the upper limit value of the separation performance parameter $\xi_2$ may not be particularly set, and is preferably $\xi_2 \leq 2.00$, and more preferably $\xi_2 \leq 1.80$ in consideration of availability of the material for achieving the separation performance parameter.

The activity coefficient of nitrogen in the first layer 3 calculated by the COSMO-RS method is defined as $\gamma^1_{N2}$, and the activity coefficient of carbon dioxide in the first layer 3 is defined as $\gamma^1_{CO2}$. The separation performance parameter of the first layer 3 at 25°C is defined as $\xi_1 = \ln(\gamma^1_{N2}) - \ln(\gamma^1_{CO2})$. In this case, it is preferable that the first layer 3 and the second layer 4 satisfies $\xi_1 < \xi_2$.

When the separation performance parameters $\xi_1$ and $\xi_2$ satisfy such a relationship, the affinity of the carbon dioxide molecules in the second layer 4 is higher than that of the nitrogen molecules in the first layer 3. Accordingly, in the second layer 4, the gas separability of carbon dioxide against nitrogen is improved. On the other hand, in the first layer 3, since the affinity of the carbon dioxide molecules is lower than that of the second layer 4, even if a pressure temporarily increases downstream of the gas separation membrane 1, it is possible to reduce the probability that the carbon dioxide that permeates the gas separation membrane 1 penetrates the first layer 3 in a reverse direction.

The first layer 3 and the second layer 4 preferably satisfy $0.10 \leq \xi_2 - \xi_1$, more preferably $0.30 \leq \xi_2 - \xi_1$, and still more preferably $0.50 \leq \xi_2 - \xi_1$. Accordingly, the gas separability of the carbon dioxide against nitrogen can be particularly enhanced.

The upper limit value of $\xi_2 - \xi_1$ may not be particularly set, and is preferably $\xi_2 - \xi_1 \leq 1.20$, and more preferably $\xi_2 - \xi_1 \leq 1.00$ in consideration of availability of the material for achieving the separation performance parameter.

Here, the COSMO-RS method will be described. Documents based on the COSMO-RS method are the following three reference documents (1) to (3).

(1) Klamt, A. J. Phys. Chem. 99, 2224 (1995).
(2) Klamt, A.; Jonas, V.; Burger, T.; Lohrenz, J. C. J. Phys. Chem. A 102, 5074 (1998).
(3) Eckert, F. and A. Klamt, AIChE Journal, 48, 369 (2002).

The COSMO-RS method is a calculation method that calculates a chemical potential $\mu$l of a molecule by statistical mechanics for a liquid based on a surface shielding charge $\sigma$ of the molecule obtained by quantum chemical calculation, and determines various equilibrium physical property values. The above-described activity coefficients $\gamma^1_{N2}$, $\gamma^1_{CO2}$, $\gamma^2_{N2}$, and $\gamma^2_{CO2}$ can be calculated by the COSMO-RS method.

When calculating the activity coefficient of a molecule, the effects of a molecular volume and molecular surface area are to be taken into account in the calculation. These effects are represented in Elbro free volume combinatorial terms. The Elbro free volume combinatorial terms are described in the following reference document (4).

(4) Elbro, H. S.; Fredenslund, A.; Rasmussen, P. A. Macromolecules 23, 4707(1990).

The free volume corresponds to a volume of a gap within the polymer, that is, within the first layer 3 and the second layer 4, through which small molecules, that is, nitrogen molecules and carbon dioxide molecules, can move.

When the free volume of any molecule i is $v_i^F$, a volume of a hard core of the molecule i is $v_i^*$, and the volume of the

molecule i in a system is $v_i$, the free volume $v_i^F$ is represented by the following Formula (a).

$$v_i^F = v_i - v_i^* \qquad (a)$$

In the above Formula (a), the volume $v_i^*$ of the hard core of molecule i is determined by quantum chemical calculation. On the other hand, the volume $v_i$ of the molecule i in the system is represented by the following Formula (b) using a molecular weight $M_i$ and a density $\rho_i$ of the molecule i.

$$v_i = \frac{M_i}{N_A \rho_i} \qquad (b)$$

In the above Formula (b), $N_A$ is an Avogadro's number.
When calculating the behavior of the small molecules in a polymer, the molecule i is considered to be a polymer. Further, the molecular weight $M_i$ of the polymer is standardized to 10000 and the density $\rho_i$ is standardized to 1.00 g/cc, and the activity coefficient at a temperature of 25 °C is calculated.
Thermodynamic property prediction software can be used for the calculation using the COSMO-RS method. An example of the software is BIOVIA COSMOOtherm 2022 manufactured by Dassault Systemes. In addition, BP_TZVPD_FINE_20.ctd is used for parameterization.
As a molecular model for calculating the activity coefficient of a molecule, a molecular model having a structure represented by the above general Formula (A) and a substitution ratio of the substituent X of 25% is used.
An average thickness of the thin film contained in the second layer 4 is not particularly limited, and is preferably 1 nm or more and 100 nm or less, more preferably 5 nm or more and 90 nm or less, and still more preferably 30 nm or more and 80 nm or less. Accordingly, in the second layer 4, the gas permeability of the carbon dioxide can be enhanced while ensuring the gas separability of the carbon dioxide against nitrogen. When the average thickness of the thin film contained in the second layer 4 is less than the lower limit value, the gas separability may decrease depending on the material of the second layer 4. On the other hand, when the average thickness of the thin film contained in the second layer 4 is more than the upper limit value, the gas permeability of the carbon dioxide contained in the second layer 4 may decrease depending on the material of the second layer 4.
The average thickness of the thin film contained in the second layer 4 is obtained, for example, as an average value of thicknesses measured at 10 locations of the thin film included in the second layer 4 by observing a cross section of the gas separation membrane 1 in an enlarged manner.

1.3. Another Configuration

Although the gas separation membrane 1 according to the embodiment is described above, any layer may be provided in at least one location downstream of the first layer 3 and between the first layer 3 and the second layer 4. For example, a porous layer made of a porous body may be provided downstream of the first layer 3. The porous layer preferably has gas permeability higher than that of the first layer 3 and rigidity higher than that of the first layer 3. Accordingly, the rigidity of the gas separation membrane 1 can be further enhanced, which can contribute to improving shape retention and durability of the gas separation membrane 1.
Examples of a material of the porous layer include a polymer material, a ceramic material, and a metal material. The material of the porous layer may be a composite material of these materials and other materials.
Examples of polymeric materials include polyolefin resins such as polyethylene and polypropylene, fluorine-containing resins such as polytetrafluoroethylene, polyvinyl fluoride and polyvinylidene fluoride, polystyrene, cellulose acetate, polyurethane, polyacrylonitrile, polyphenylene oxide, polysulfone, polyethersulfone, polyimide, and polyaramid.
Examples of the ceramic material include alumina, cordierite, mullite, silicon carbide, and zirconia. Examples of the metal material include stainless steel.
An average thickness of the porous layer is not particularly limited, and is preferably 1 μm or more and 3000 μm or less, more preferably 5 μm or more and 500 μm or less, and still more preferably 10 μm or more and 150 μm or less. Accordingly, the porous layer has a necessary and sufficient rigidity to support the first layer 3 and the second layer 4.
The average thickness of the porous layer is an average value of thicknesses measured at 10 locations of the porous layer in a stacking direction. The thickness of the porous layer can be measured using, for example, a thickness gauge.
An average pore diameter of the porous layer is preferably 0.1 μm or less, more preferably 0.01 μm or more and 0.09 μm or less, and still more preferably 0.01 μm or more and 0.07 μm or less. Accordingly, it is possible to prevent the first layer 3 from coming out to the downstream of the porous layer.

The average pore diameter of the porous layer is measured by a through pore diameter evaluation device. Examples of the through pore diameter evaluation device include a perm porometer manufactured by PMI.

A porosity of the porous layer is preferably 20% or more and 90% or less, and more preferably 30% or more and 80% or less. Accordingly, the porous layer can achieve both good gas permeability and sufficient rigidity. A porosity of the porous layer is measured by the above-described through pore diameter evaluation device.

In the gas separation membrane 1 as described above, the gas separation ratio of carbon dioxide against nitrogen is preferably 10 or more, and more preferably 15 or more. Accordingly, the gas separation membrane 1 suitable for separation of carbon dioxide from an atmosphere is obtained. The gas separation ratio of carbon dioxide against nitrogen is determined as a ratio of the permeation rate of carbon dioxide to the permeation rate of nitrogen.

The first layer 3 may be a porous layer as described above.

2. Method for Producing Gas Separation Membrane

The gas separation membrane 1 is produced, for example, by forming a raw material of the second layer 4 on the upper surface 31 of the first layer 3.

Examples of a film-forming method of the raw material of the second layer 4 include various liquid phase film-forming methods such as a dipping method, a dropping method, an inkjet method, a dispenser method, a spraying method, a screen printing method, a coater application method, and a spin coating method, and gas phase film-forming methods such as a plasma CVD method and a plasma polymerization method.

Among these, the inkjet method is preferably used. The inkjet method is a method in which an ink is dispensed and fixed while an inkjet head is moved relatively to the upper surface 31. As the ink, a liquid containing the raw material of the second layer 4 is used. By using the inkjet method, it is possible to deposit a desired amount of material at a desired position with a high probability. Therefore, even if the film thickness is small, the second layer 4 having a high coverage can be formed. As a result, the gas separation membrane 1 having high gas separability of carbon dioxide against nitrogen and excellent gas permeability of carbon dioxide can be efficiently produced.

Prior to the formation of the second layer 4, an activation treatment may be performed on the upper surface 31 of the first layer 3. The activation treatment is not particularly limited as long as it is processing of activating the upper surface 31. Examples of the activation treatment include a method for irradiating the upper surface 31 with energy rays, a method for heating the upper surface 31, a method for exposing the upper surface 31 to plasma or corona, and a method for exposing the upper surface 31 to an ozone gas. Examples of the energy ray include infrared rays, ultraviolet rays, and visible light.

3. Use of Gas Separation Membrane

The gas separation membrane 1 according to the embodiment can be used for carbon dioxide separation and recovery from a mixed gas containing carbon dioxide and nitrogen, carbon dioxide separation and purification, and the like. In particular, it is effective to use the gas separation membrane 1 in a technique for separating and recovering carbon dioxide contained in the atmosphere (direct air recovery (DAC)).

4. Effects of Embodiment

As described above, the gas separation membrane 1 according to the embodiment is a gas separation membrane that separates carbon dioxide from a mixed gas containing carbon dioxide and nitrogen by selectively allowing the carbon dioxide to permeate therethrough, and has a thin film made of a polydimethylsiloxane derivative. The thin film has a thin film made of a polydimethylsiloxane derivative containing a main chain constituted by a siloxane bond and a methyl group bonded to a silicon atom contained in the siloxane bond, in which a part of the methyl group is substituted with the substituent X. Further, in the gas separation membrane 1, the molecular descriptor $\alpha_{MOL}$ of the substituent X calculated based on the following Formulas (1) and (2) satisfies the following Formula (3).

$$\alpha_{\mathrm{MOL}} = \sum_{i}^{N} \alpha_{\mathrm{A}_i} \qquad (1)$$

[In the above Formula (1), i is a natural number that changes from 1 to N. N is the number of atoms excluding hydrogen atoms contained in the substituent X.]

$$\alpha_{A_i} = \frac{r_{A_i}}{r_C} - 1 \qquad (2)$$

[In the above Formula (2), $r_{Ai}$ is a covalent bond distance of atoms excluding the hydrogen atoms contained in the substituent X. $r_C$ is the covalent bond distance of an $sp^3$ orbital of the carbon atoms.]

$$\alpha_{MOL} < 0 \qquad (3)$$

According to such a configuration, the gas separation membrane 1 having good gas separability of carbon dioxide against nitrogen and good gas permeability of carbon dioxide can be obtained.

In the gas separation membrane 1 according to the embodiment, the substituent X includes an aromatic ring.

According to such a configuration, the covalent bond distance of the atoms of the substituent X can be shortened. Accordingly, the substituent X having a small molecular descriptor $\alpha_{MOL}$ is obtained.

In the gas separation membrane 1 according to the embodiment, the substituent X contains a nitrogen-containing heterocyclic ring.

According to such a configuration, the covalent bond distance of the atoms of the substituent X can be shortened. Accordingly, the substituent X having a small molecular descriptor $\alpha_{MOL}$ is obtained.

In the gas separation membrane 1 according to the embodiment, the substituent X includes a ring-condensed structure or a ring-assembled structure.

According to such a configuration, the covalent bond distance of the atoms of the substituent X can be further shortened. Accordingly, the gas separation membrane 1 having particularly high gas separability is obtained.

In the gas separation membrane 1 according to the embodiment, the substituent X includes a ketone group.

According to such a configuration, the gas separation membrane 1 having particularly high gas separability is obtained.

In addition, the gas separation membrane 1 according to the above embodiment has the first layer 3 which has a thicker average thickness than a thin film and has high gas permeability of carbon dioxide, and the second layer 4 which includes a thin film provided on one side of the first layer 3.

According to such a configuration, the first layer 3 can impart good gas permeability to the gas separation membrane 1 while mechanically supporting the second layer 4.

In the gas separation membrane 1 according to the embodiment, the thin film has an average thickness of 1 nm or more and 100 nm or less.

According to such a configuration, in the second layer 4, the gas permeability of the carbon dioxide can be enhanced while ensuring the gas separability of the carbon dioxide against nitrogen.

Although the gas separation membrane according to the present disclosure is described based on the preferred embodiment, the present disclosure is not limited thereto.

For example, in the gas separation membrane according to the present disclosure, each part of the embodiment described above may be replaced with a component having a similar function, or any component may be added to the embodiment described above.

## Examples

Next, specific examples of the present disclosure will be described.

### 5. Preparation of Gas Separation Membrane

#### 5.1. Example 1

First, a PDMS sheet as a first layer is prepared. The PDMS sheet is a 30 μm thick sheet made of unsubstituted polydimethyl siloxane. Next, one surface of the PDMS sheet was subjected to a plasma treatment as an activation treatment.

Next, solutions of polydimethylsiloxane derivatives shown in Table 2 were prepared. The substitution ratio of the substituent X in the polydimethylsiloxane derivative was 25%.

Next, the obtained solution was dispensed onto the first layer by an inkjet method, and then dried at 80°C. Accordingly, a thin film (second layer) made of a polydimethylsiloxane derivative was formed on the first layer to obtain a gas separation membrane.

5.2. Examples 2 to 14

Gas separation membranes were obtained in the same manner as in Example 1 except that the materials of the second layer were changed as shown in Tables 2 and 3.

5.3. Comparative Example 1

The formation of the second layer was omitted, and only the first layer was used as the gas separation membrane of Comparative Example 1.

5.4. Comparative Example 2

A gas separation membrane was obtained in the same manner as in Example 1 except that unsubstituted polydimethyl siloxane was used as the material of the second layer.

5.5. Comparative Example 3

A gas separation membrane was obtained in the same manner as in Example 1 except that a polydimethylsiloxane derivative obtained by introducing a substituent containing an amino group into PDMS was used as the material of the second layer. The substitution ratio of the substituent was 25%.

Tables 2 and 3 show the materials (base and substituent X) of the second layer, the molecular descriptor $\alpha_{MOL}$, the average thickness, and the separation performance parameters $\xi_2$ and $\xi_2 - \xi_1$ in the above respective Examples and Comparative Examples. In Tables 2 and 3, "Included" indicates that the substituent X contains a ring-condensed structure, a ring-assembled structure, or a ketone group, respectively. The material, the average thickness, and the separation performance parameter $\xi_1$ of the first layer are shown in Tables 2 and 3.

6. Evaluation of Gas Separation Membrane

The gas separation membranes in each Example and each Comparative Example are evaluated as follows.

6.1. Gas Permeability

The gas separation membranes in each Example and each Comparative Example were cut into a circle having a diameter of 5 cm to prepare test samples. Next, using a gas permeability measuring device, a mixed gas obtained by mixing carbon dioxide:nitrogen at a volume ratio of 13:87 was supplied upstream of the test sample. A total upstream pressure was adjusted to 5 MPa, a partial pressure of carbon dioxide was adjusted to 0.65 MPa, a flow rate was adjusted to 500 mL/ min, and a temperature was adjusted to 40°C. A gas component that permeated through the test sample was analyzed by gas chromatography.

Next, the gas permeation rate $R_{CO2}$ of the carbon dioxide in the gas separation membrane was calculated based on an analysis result. Next, when the gas permeation rate $R_{CO2}$ calculated for a gas separation membrane in which the formation of the second layer was omitted (gas separation membrane formed only of the first layer: Comparative Example 1) was used as a standard, a degree to which the gas permeation rate $R_{CO2}$ calculated for the gas separation membranes of each Example and Comparative Example decreases was calculated as a "$CO_2$ permeability reduction rate". The $CO_2$ permeability reduction rate is a ratio of a reduction amount to the reference described above. The calculated $CO_2$ permeability reduction rate was then compared with the following evaluation criteria to relatively evaluate the gas permeability of the gas separation membrane. The evaluation results are shown in Tables 2 and 3.

A: The $CO_2$ permeability reduction rate is 20% or less.
B: The $CO_2$ permeability reduction rate is more than 20% and less than 30%.
C: The $CO_2$ permeability reduction rate is more than 30%.

6.2. Gas Separability

Based on the above-described analysis result, a nitrogen gas permeation rate $R_{N2}$ through the gas separation membrane was calculated. Next, a ratio $R_{CO2}/R_{N2}$ of the carbon dioxide gas transmission rate $R_{CO2}$ to the nitrogen gas permeation rate $R_{N2}$ was calculated. Further, the gas separability of the gas separation membrane was relatively evaluated by comparing the ratio $R_{CO2}/R_{N2}$ with the following evaluation criteria. The evaluation results are shown in Tables 2 and 3.

A: The ratio $R_{CO2}/R_{N2}$ is particularly larger than that of Comparative Example 1.
B: The ratio $R_{CO2}/R_{N2}$ is larger than Comparative Example 1 (smaller than A)
C: The ratio $R_{CO2}/R_{N2}$ is equivalent to that of Comparative Example 1
D: The ratio $R_{CO2}/R_{N2}$ is smaller than that of Comparative Example 1.

Table 2

| | | | | Example 1 | Example 2 | Example 3 | Example 4 | Example 5 | Example 6 | Example 7 | Example 8 |
|---|---|---|---|---|---|---|---|---|---|---|---|
| Configuration of gas separation membrane | Second layer | Base | - | PDMS | PDMS | PDMS | PDMS | PDMS | PDMS | PDMS | PDMS |
| | | Substituent X | - | X-1 | X-2 | X-3 | X-4 | X-5 | X-6 | X-7 | X-8 |
| | | Type of ring structure | - | Aromatic ring | Aromatic ring | Nitrogen-containing heterocyclic ring | Nitrogen-containing heterocyclic ring | Nitrogen-containing heterocyclic ring | Nitrogen-containing heterocyclic ring | Nitrogen-containing heterocyclic ring | Nitrogen-containing heterocyclic ring |
| | | Number of heteroatoms in heterocyclic ring | - | - | - | 1 | 2 | 1 | 2 | 3 | 2 |
| | | Ring-condensed structure | | - | Included | Included | Included | - | - | - | - |
| | | Ring-assembled structure | - | - | Included | - | - | Included | Included | Included | Included |
| | | Ketone group | - | - | - | - | - | - | - | - | Included |
| | | Molecular descriptor $\alpha_{MOL}$ | - | -0.87 | -3.87 | -1.92 | -2.58 | -2.12 | -2.33 | -2.54 | -2.27 |
| | | Average thickness | nm | 80 | 100 | 80 | 80 | 70 | 70 | 50 | 50 |
| | | Separation performance parameter $\xi_2$ | - | 1.25 | 1.17 | 1.13 | 1.13 | 1.45 | 1.02 | 1.13 | 1.20 |
| | | $\xi_2 - \xi_1$ | - | 0.69 | 0.61 | 0.57 | 0.57 | 0.89 | 0.46 | 0.57 | 0.64 |
| | | Film-forming method | - | Inkjet method | | | | | | | |

(continued)

| | | | | Example 1 | Example 2 | Example 3 | Example 4 | Example 5 | Example 6 | Example 7 | Example 8 |
|---|---|---|---|---|---|---|---|---|---|---|---|
| | First layer | Material | - | PDMS | PDMS | PDMS | PDMS | PDMS | PDMS | PDMS | PDMS |
| | | Average thickness | μm | 30 | 30 | 30 | 30 | 30 | 30 | 30 | 30 |
| | | Separation performance parameter $\xi_1$ | - | 0.56 | 0.56 | 0.56 | 0.56 | 0.56 | 0.56 | 0.56 | 0.56 |
| Evaluation result of gas separation membrane | Gas permeability | | | A | A | A | A | A | A | A | A |
| | Gas separability | | | B | B | B | A | B | A | A | A |

Table 3

| | | | | Example 9 | Example 10 | Example 11 | Example 12 | Example 13 | Example 14 | Comparative Example 1 | Comparative Example 2 | Comparative Example 3 |
|---|---|---|---|---|---|---|---|---|---|---|---|---|
| Configuration of gas separation membrane | Second layer | Base | - | PDMS | PDMS | PDMS | PDMS | PDMS | PDMS | - | PDMS | PDMS |
| | | Substituent X | - | X-9 | X-10 | X-11 | X-12 | X-13 | X-14 | - | - | Amino group |
| | | Type of ring structure | - | Nitrogen-containing heterocyclic ring | Nitrogen-containing heterocyclic ring | Nitrogen-containing heterocyclic ring | Nitrogen-containing heterocyclic ring | Nitrogen-containing heterocyclic ring | Nitrogen-containing heterocyclic ring | - | - | None |
| | | Number of heteroatoms in heterocyclic ring | - | 2 | 1 | 1 | 1 | 2 | 3 | - | - | - |
| | | Ring-condensed structure | - | - | - | - | Included | Included | Included | - | - | - |
| | | Ring-assembled structure | - | Included | Included | Included | Included | Included | Included | - | - | - |
| | | Ketone group | - | - | - | - | - | Included | Included | - | - | - |
| | | Molecular descriptor $\alpha_{MOL}$ | - | -2.83 | -5.52 | -5.52 | -3.35 | -4.29 | -5.30 | - | 0.43 | 0.39 |
| | | Average thickness | nm | 80 | 100 | 100 | 100 | 100 | 100 | - | 80 | 70 |
| | | Separation performance parameter $\xi_2$ | - | 1.33 | 1.61 | 1.72 | 1.25 | 1.33 | 1.30 | - | 0.56 | 0.85 |
| | | $\xi_2 - \xi_1$ | - | 0.77 | 1.05 | 1.16 | 0.69 | 0.77 | 0.74 | - | 0.00 | 0.29 |
| | | Film-forming method | - | Inkjet method | | | | | | - | Inkjet method | |

(continued)

| | | | | Example 9 | Example 10 | Example 11 | Example 12 | Example 13 | Example 14 | Comparative Example 1 | Comparative Example 2 | Comparative Example 3 |
|---|---|---|---|---|---|---|---|---|---|---|---|---|
| | First layer | Material | - | PDMS | PDMS | PDMS | PDMS | PDMS | PDMS | PDMS | PDMS | PDMS |
| | | Average thickness | μm | 30 | 30 | 30 | 30 | 30 | 30 | 30 | 30 | 30 |
| | | Separation performance parameter $\xi_1$ | - | 0.56 | 0.56 | 0.56 | 0.56 | 0.56 | 0.56 | 0.56 | 0.56 | 0.56 |
| Evaluation result of gas separation membrane | Gas permeability | | | A | A | A | A | A | A | - | A | A |
| | Gas separability | | | A | B | B | A | A | A | - | C | C |

As is clear from Tables 2 and 3, the gas separation membranes of each Example show little decrease in gas permeability compared to the standard (small $CO_2$ permeability reduction rate) and have higher gas separability of carbon dioxide than each Comparative Example. In particular, it is found that when a group containing a nitrogen-containing heterocyclic ring, a group containing a ring-condensed structure or a ring-assembled structure, a group containing a ketone group, or the like is used as the substituent X, the gas separability can be enhanced.

## Claims

1. A gas separation membrane that selectively separates carbon dioxide from a mixed gas containing the carbon dioxide and nitrogen by allowing the carbon dioxide to permeate, the gas separation membrane comprising:

   a thin film made of a polydimethylsiloxane derivative that includes a main chain formed of a siloxane bond and a methyl group bonded to silicon atoms contained in the siloxane bond, with a part of the methyl group being substituted with a substituent X, wherein
   a molecular descriptor $\alpha_{MOL}$ of the substituent X calculated based on the following Formulae (1) and (2) satisfies the following Formula (3),

$$\alpha_{\mathrm{MOL}} = \sum_{i}^{N} \alpha_{\mathrm{A}_i} \qquad (1)$$

   in the above Formula (1), i is a natural number that changes from 1 to N, and N is the number of atoms excluding hydrogen atoms contained in the substituent X, and

$$\alpha_{\mathrm{A}_i} = \frac{r_{\mathrm{A}_i}}{r_{\mathrm{C}}} - 1 \qquad (2)$$

   in the above Formula (2), $r_{Ai}$ is a covalent bond distance of atoms excluding the hydrogen atoms contained in the substituent X, and $r_C$ is a covalent bond distance of an $sp^3$ orbital of carbon atoms.

$$\alpha_{\mathrm{MOL}} < 0 \qquad (3)$$

2. The gas separation membrane according to claim 1, wherein
   the substituent X contains an aromatic ring.

3. The gas separation membrane according to claim 1, wherein
   the substituent X contains a nitrogen-containing heterocyclic ring.

4. The gas separation membrane according to claim 1, wherein
   the substituent X contains a ring-condensed structure or a ring-assembled structure.

5. The gas separation membrane according to claim 1, wherein
   the substituent X contains a ketone group.

6. The gas separation membrane according to claim 1, further comprising:

   a first layer having an average thickness greater than an average thickness of the thin film and having high gas permeability of carbon dioxide; and
   a second layer including the thin film provided on one surface of the first layer.

7. The gas separation membrane according to claim 1, wherein
   the thin film has an average thickness of 1 nm or more and 100 nm or less.

FIG. 1

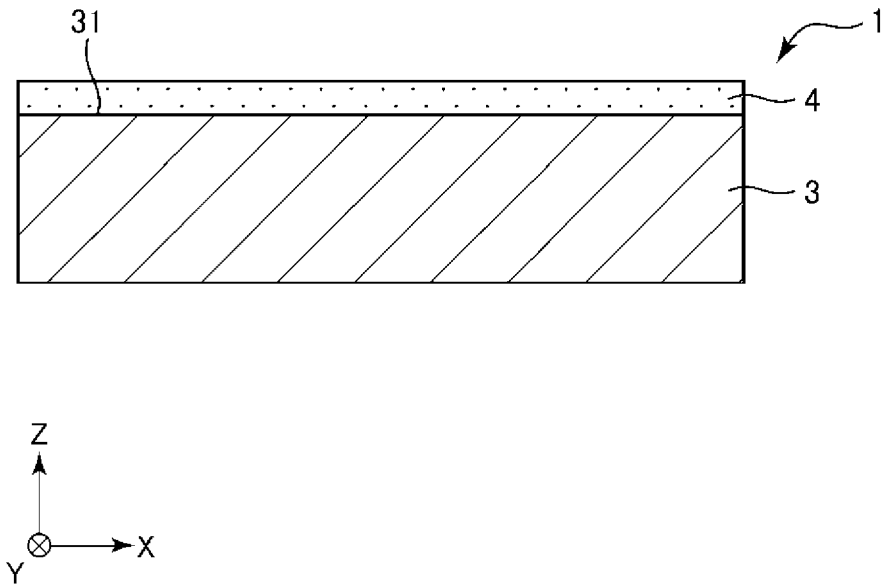

Europäisches Patentamt
European Patent Office
Office européen des brevets

# EUROPEAN SEARCH REPORT

Application Number
EP 25 16 2841

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/221813 A1 (YANG JOHN [US] ET AL) 9 August 2018 (2018-08-09)<br>* claim 1 *<br>* figure 20 *<br>* paragraph [0117] *<br>* example 9 *<br>----- | 1,2,6,7 | INV.<br>B01D71/70 |
| X | US 4 644 046 A (YAMADA TAKEYOSHI [JP]) 17 February 1987 (1987-02-17)<br>* column 31, line 49 - line 66 *<br>* table 3 *<br>* example 28 *<br>* column 31, line 40 - line 48 *<br>----- | 1,3,6,7 | |
| X | KUGEL ALEX ET AL: "Antimicrobial polysiloxane polymers and coatings containing pendant levofloxacin", POLYMER CHEMISTRY, vol. 1, no. 4, 28 January 2010 (2010-01-28), pages 442-452, XP093299792, Cambridge ISSN: 1759-9954, DOI: 10.1039/b9py00309f<br>* page 451 *<br>* figure 2 *<br>-----<br>-/-- | 1-5 | TECHNICAL FIELDS SEARCHED (IPC)<br>B01D |

The present search report has been drawn up for all claims

| Place of search | Date of completion of the search | Examiner |
|---|---|---|
| Munich | 13 August 2025 | Sandin Rodriguez, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

page 1 of 2

Europäisches Patentamt
European Patent Office
Office européen des brevets

# EUROPEAN SEARCH REPORT

Application Number
EP 25 16 2841

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Heyrovska Raji: "Various Carbon to Carbon Bond Lengths Inter-related via the Golden Ratio, and their Linear Dependence on Bond Energies", arXiv.org, 1 September 2008 (2008-09-01), pages 1-11, XP093300143, Retrieved from the Internet: URL:https://www.researchgate.net/publication/1774241_Various_Carbon_to_Carbon_Bond_Lengths_Inter-related_via_the_Golden_Ratio_and_their_Linear_Dependence_on_Bond_Energies * page 7 * ----- | 1 | |
| A | VERMEEREN PASCAL ET AL: "Not Carbon s-p Hybridization, but Coordination Number Determines C-H and C-C Bond Length", CHEMISTRY - A EUROPEAN JOURNAL, vol. 27, no. 24, 1 April 2021 (2021-04-01), pages 7074-7079, XP093300150, DE ISSN: 0947-6539, DOI: 10.1002/chem.202004653 Retrieved from the Internet: URL:https://onlinelibrary.wiley.com/doi/pdf/10.1002/chem.202004653> * table 1 * ----- | 1 | TECHNICAL FIELDS SEARCHED (IPC) |
| A | Kozmin P.A.: "Crystal Structure of Piperazine Thiomolybdate", , 30 December 1971 (1971-12-30), pages 1-3, XP093300152, Retrieved from the Internet: URL:https://link.springer.com/content/pdf/10.1007/BF00744543.pdf * page 82 - paragraph 3 * ----- | 1 | |

The present search report has been drawn up for all claims

| Place of search | Date of completion of the search | Examiner |
|---|---|---|
| Munich | 13 August 2025 | Sandin Rodriguez, R |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 16 2841

This annex lists the patent family members relating to the patent documents cited in the above-mentioned European search report. The members are as contained in the European Patent Office EDP file on
The European Patent Office is in no way liable for these particulars which are merely given for the purpose of information.

13-08-2025

| Patent document cited in search report | Publication date | Patent family member(s) | Publication date |
|---|---|---|---|
| US 2018221813 A1 | 09-08-2018 | CN 110267730 A | 20-09-2019 |
| | | EP 3579954 A1 | 18-12-2019 |
| | | JP 7091351 B2 | 27-06-2022 |
| | | JP 2020507459 A | 12-03-2020 |
| | | KR 20190111127 A | 01-10-2019 |
| | | SA 519402449 B1 | 17-10-2022 |
| | | SG 11201907197U A | 27-09-2019 |
| | | US 2018221813 A1 | 09-08-2018 |
| | | WO 2018148258 A1 | 16-08-2018 |
| US 4644046 A | 17-02-1987 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2024039275 A
- JP 60075320 A


### Non-patent literature cited in the description


- **KLAMT, A.** *J. Phys. Chem.*, 1995, vol. 99, 2224
- **KLAMT, A.** ; **JONAS, V.** ; **BURGER, T.** ; **LOHRENZ, J. C.** *J. Phys. Chem. A*, 1998, vol. 102, 5074
- **ECKERT, F.** ; **A. KLAMT**. *AIChE Journal*, 2002, vol. 48, 369
- **ELBRO, H. S.** ; **FREDENSLUND, A.** ; **RASMUSSEN, P. A.** *Macromolecules*, 1990, vol. 23, 4707